# DEMANDE DE BREVET EUROPEEN

(11) **EP 1 353 402 A1**
(43) Date de publication de la demande: **15.10.2003**
(21) Numéro de dépôt: 03100924.4
(22) Date de dépôt: 07.04.2003
(51) Int. Cl.: H01Q 1/28, H01Q 3/00, H01Q 21/28

(54) **Système antennaire modulaire**

(30) Priorité: 09.04.2002 FR 0204405
(71) Demandeur: Thales, 75008 Paris (FR)
(72) Inventeur: QUAGLIARO, Gilles, 94117 CX, ARCUEIL (FR)
(74) Mandataire: Dudouit, Isabelle

(57) **Abrégé**

Système antennaire comportant une antenne Gatelink (1), une antenne Satcom Ku (2), une antenne Satcom Inmarsat (3) disposées sur un support mobile (5) en rotation et/ou en translation et un dispositif de protection (6) des antennes.
Application à un avion de ligne.

## Description

La présente invention concerne notamment un système antennaire modulaire avionique intégré, comportant au moins deux antennes directives susceptibles de fonctionner dans des bandes de fréquence différentes B₁, B₂.

Elle s'applique plus particulièrement sur tout porteur mobile équipé de plusieurs antennes directives fonctionnant par exemple dans des gammes de fréquence différentes et devant être située dans un espacement limité. Le porteur est par exemple un navire, un avion ou une voiture.

Dans les applications mobiles, l'antenne qui est utilisée de préférence est l'antenne dipôle, dont quelques réalisations pratiques sont : l'antenne fouet, l'antenne quart d'onde, l'antenne aileron, l'antenne intégrée des téléphones portatifs. Une telle antenne présente comme avantages, par exemple, d'être d'un faible encombrement pour les fréquences au-delà de 1 GHz et d'être quasi-omnidirectionnelle, c'est-à-dire de ne pas nécessiter de dispositif de pointage.

Toutefois, l'antenne dipôle présente aussi certains inconvénients, notamment, d'être polluante à l'émission (elle émet un signal vers tous les récepteurs en sus du récepteur utile) et d'être non discriminante en réception (elle reçoit tous les émetteurs en sus de l'émetteur utile). De plus, en raison de sa petite taille, elle est peu sensible et demande des puissances d'émission importantes. L'antenne dipôle contribue ainsi à un gaspillage de la ressource fréquence. Les antennes directives sont plus facilement utilisées dans des applications fixes.

La croissance des besoins en radiocommunications conduit à déployer plusieurs systèmes radio sur les porteurs, à chaque système est associée une antenne. La concentration des antennes et leur collocation induisent notamment une baisse critique des performances. Dans le cas des avions de ligne, par exemple, le nombre et la disposition des antennes actuelles interdit pratiquement l'installation d'antennes supplémentaires.

Aujourd'hui, pour les applications mobiles, on dispose par exemple, de bandes réservées permettant l'utilisation d'antennes peu directives. C'est le cas du système INMARSAT, déployé en bande L, et du futur système AIRTV, déployé en bande S. La ressource fréquence allouée à ces systèmes reste néanmoins marginale et leur capacité est handicapée par la faible sélectivité des antennes.

L'objet de l'invention a trait à un système antennaire destiné à être installé par exemple sur un porteur mobile. Ce système antennaire comporte au moins deux antennes directives travaillant dans des domaines différents de fréquence.

Le système antennaire réalise la fonction de plusieurs antennes, par exemple la fonction de trois antennes directives, dans un volume et des servitudes équivalents à ceux habituellement nécessaires à une antenne.

L'objet de l'invention concerne un système antennaire caractérisé en ce qu'il comporte au moins trois antennes directives, une antenne Gatelink, une antenne Satcom Ku, une antenne Satcom Inmarsat, lesdites antennes étant disposées sur un support mobile en rotation et/ou en translation et un dispositif de protection des antennes.

La protection des antennes est par exemple assurée par un radôme.

Il peut comporter en plus une antenne de type GPS.

L'invention concerne aussi un système de télécommunication caractérisé en ce qu'il comporte au moins un système antennaire présentant l'une des caractéristiques précitées et au moins un dispositif de pointage d'antenne, en liaison avec une centrale inertielle, ainsi qu'un émetteur-récepteur .

L'invention est utilisée par exemple pour équiper le fuselage d'un avion de ligne.

Le système antennaire, objet de la présente invention, offre notamment comme avantage d'intégrer plusieurs antennes directives dans un système de taille réduite.

D'autres caractéristiques et avantages du système antennaire selon l'invention apparaîtront mieux à la lecture de la description annexée des figures qui représentent
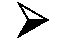 La figure 1 un exemple d'architecture d'un système antennaire selon l'invention,
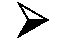 La figure 2 un schéma du synoptique complet,
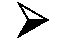 La figure 3 un exemple d'installation du système antennaire sur un avion.

De manière à mieux faire comprendre l'objet de la présente invention, la description qui suit, donnée à titre illustratif et nullement limitatif, concerne un avion de ligne équipé par exemple d'un système antennaire comportant au moins trois antennes directives. Chaque antenne est destinée par exemple à une application donnée, telle que Inmarsat, Ku Band et Gatelink. Les trois applications fonctionnent dans trois bandes de fréquence différentes F₁, F_{2,} F₃ et les trois antennes ne sont pas activées en même temps.

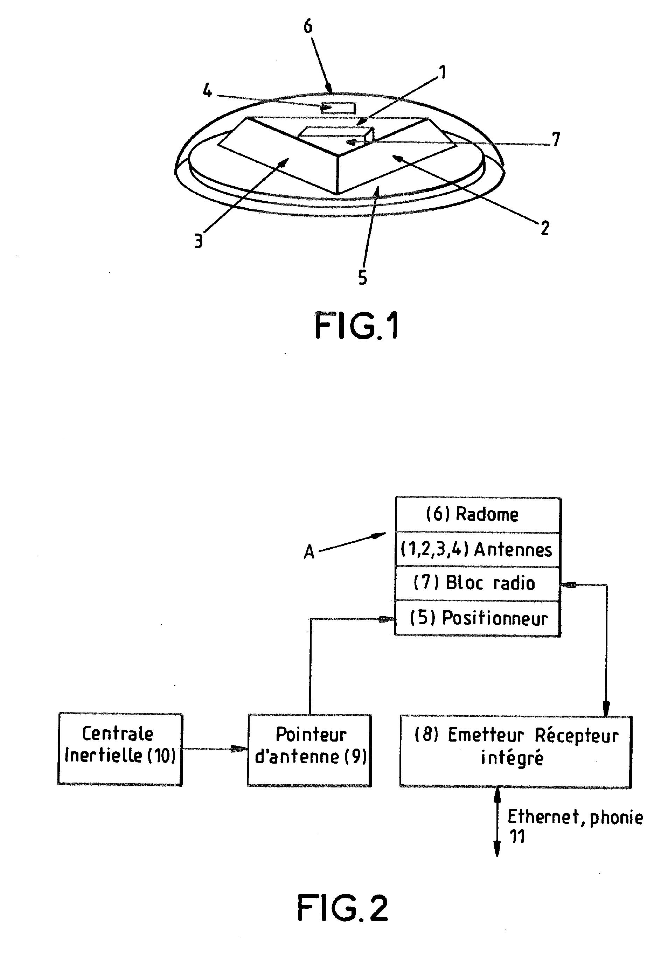

La figure 1 représente un exemple de système antennaire modulaire intégré selon l'invention, comportant un positionneur 5 constitué par exemple d'un plateau tournant motorisé. Le positionneur permet l'orientation sur un axe en azimut des antennes qu'il supporte. Il peut être mobile en rotation et/ou en translation. Dans ce cas il est équipé d'un dispositif non représenté qui permet de réaliser les mouvements de rotation et de translation. Les 3 antennes couvrent par exemple les services pour un avion de ligne et sont :
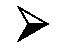 Une antenne Gatelink 1, bande de fréquence F₁, assurant un service de pont radio en bande S ou C entre l'avion en parking et un réseau local de l'aéroport. Le système Gatelink est défini dans l'ARINC763.
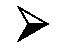 Une antenne de type Satcom Ku, 2, bande de fréquence F₂, permettant la réception DVB-S (abréviation de Digital Video Broadcasting Satellite) des satellites de type Astra ou Hot Bird. Cette antenne peut également assurer une voie de retour conformément au système DVB-RCS (abréviation de Digital Video Broadcasting Return Channel via Satellite tel que défini dans la norme ETSI EN 301 790). Cette antenne 2 est par exemple associée à un support orientable mécaniquement ou bien en liaison avec un dispositif permettant son orientation électronique en élévation non représentés pour des raisons de simplification. Cette station est par exemple similaire à la station LMES définie dans la norme ETSI EN 301 427.
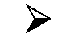 Une antenne satcom Inmarsat 3, bande de fréquence F₃, assurant un service phonie données, avec les satellites du même nom. Cette antenne est normalisée dans l'ARINC 741 et dans l'ARINC 761. De la même façon que pour l'antenne Satcom Ku 2, l'antenne peut être associée à un dispositif permettant son orientation mécanique ou encore être relié à un dispositif qui assure une orientation électronique en élévation.

Les dispositifs permettant l'orientation mécanique ou électronique des antennes sont connus de l'Homme du métier et n'étant pas l'objet de l'invention, ils ne seront pas détaillés.
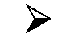 De manière optionnelle, le support peut aussi comporter une antenne 4 de type GPS (Global Positioning System), installée de façon à ne pas interférer avec les autres antennes. Une telle antenne est quasi omnidirectionnelle.

Le système antennaire comporte aussi un radôme 6 disposé de façon à couvrir la totalité des antennes installées afin de les protéger. Un bloc radio 7 connu de l'Homme du métier assure les fonctions radio de proximité avec les différentes antennes. Par exemple, il remplit les fonctions d'amplificateur de puissance, d'amplification faible bruit, de filtres, de duplexeur. Ce bloc radio est par exemple optimisé en fonction de l'implémentation des antennes dans le système antennaire.

Les trois antennes, Gatelink 1, Satcom Ku 2 et Inmarsat 3 sont, par exemple, disposées sans vis à vis pour émettre vers les côtés sans interférer entre elles, selon par exemple un schéma tel que représenté à la figure 1. Elles forment un triangle, avec le bloc radio 7 disposé au centre. Dans une telle configuration, elles laissent une zone d'ombre au centre du système antennaire, zone d'ombre dans laquelle est disposée l'antenne GPS. Les précautions d'usage habituelles et connues de l'Homme du métier, pour l'implémentation des antennes, peuvent être trouvées en partie dans la norme ARINC 761 et sont respectées.

Les servitudes nécessaires au fonctionnement de l'ensemble, par exemple les alimentations, le refroidissement, etc., ne sont pas détaillées car elles ne sont pas l'objet de l'invention.

La figure 2 montre un exemple de synoptique d'un système de télécommunication installé sur un avion de ligne, par exemple, comprenant le système antennaire selon l'invention en liaison avec l'avion. Une description détaillée du synoptique peut être trouvée dans l'ARINC 741.

Le système antennaire, représenté par le bloc A sur la figure, reçoit une information de pointage délivrée par un pointeur d'antenne 9 qui est relié à une centrale inertielle 10. Un émetteur-récepteur intégré 8, par exemple, est en liaison avec un réseau 11 Ethernet, phonie, etc. et dialogue avec le système antennaire A.

La centrale inertielle 10 ou tout dispositif adapté permet notamment d'obtenir le relevé de la position géographique, l'orientation et l'altitude de l'avion.

Le pointeur d'antenne 9 pilote la sélection de l'antenne et l'orientation du positionneur en fonction par exemple de la position, de l'orientation et de l'altitude de l'avion, communiquées par la centrale inertielle, et en fonction, par exemple, de la direction supposée connue de la liaison radio requise. Dans le cas d'un avion de ligne, le pointeur activera par exemple l'antenne 1 Gatelink si l'avion est au sol à l'aéroport, l'antenne 2 Satcom Ku si l'avion est en vol au-dessus d'une zone continentale servie par un satellite Ku, l'antenne 3 INMARSAT si l'avion est en vol au-dessus d'une zone maritime non desservie par un satellite Ku. Les positions des satellites Ku et Inmarsat sont connues avec une précision suffisante pour permettre un pointage direct de l'antenne avec la précision nécessaire. Ces positions sont inscrites, par exemple, dans la mémoire du pointeur d'antenne. Un exemple d'implémentation du pointage vers les satellites INMARSAT, transposable aux satellites Ku, est donnée dans l'ARINC 741. Au sol à l'aéroport, selon le même principe, la position et l'orientation d'un avion en parking sur un aéroport est connue à l'avance et ces données sont stockées dans la mémoire du pointeur avec les informations relatives à la position des points d'accès radio sur l'aéroport. Un système d'acquisition par balayage en azimut de l'antenne (scanning) peut être implémenté pour palier au cas où ces données ne sont pas connues ou obsolètes.

L'émetteur-récepteur intégré 8 réalise, par exemple, dans un même équipement, toutes les fonctions de télécommunications associées à l'invention. Il est raccordé au réseau de bord au travers des interfaces standards données, tels que l'Ethernet, la phonie, etc.

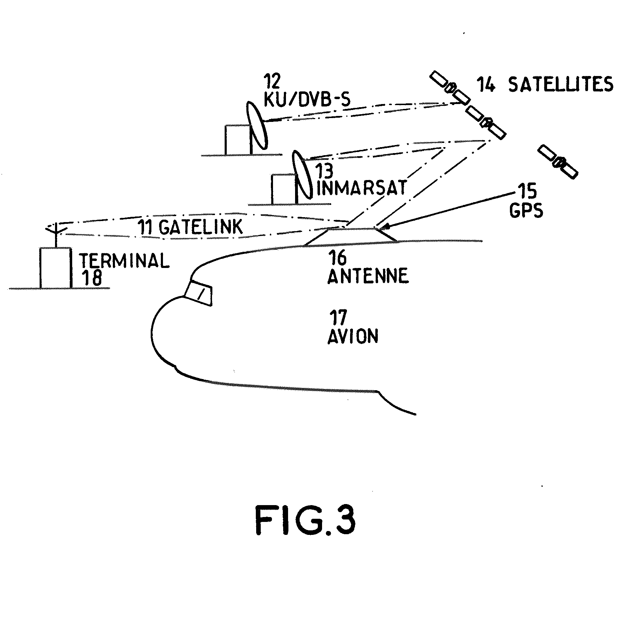

La figure 3 schématise un exemple d'installation d'une antenne selon l'invention sur un avion de ligne. Le système antennaire référencé 16 est installé par exemple sur le fuselage de l'avion. Le système permet notamment à l'avion de :
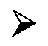 Communiquer avec un aéroport, au travers de l'application Gatelink 11, normalisée par l'ARINC 763, par exemple,
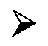 Recevoir la télévision DVB-S, 12, en réception seule, ou interactive, par exemple selon la norme DVB-RCS,
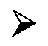 D'établir des liaisons phonies et bas débit via Inmarsat, 13,
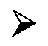 De relever sa position au travers le système GPS, 15.
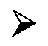 Les trois derniers services sont par exemple assurés par une liaison satellite, 14.

## Revendications

1. Système antennaire **caractérisé en ce qu'**il comporte au moins trois antennes directives, une antenne Gatelink (1), une antenne Satcom Ku (2), une antenne Satcom Inmarsat (3), lesdites antennes étant disposées sur un support mobile en rotation (5) et/ou en translation et un dispositif de protection (6) des antennes.

2. Système selon la revendication 1 **caractérisé en ce que** le dispositif de protection est un radôme.

3. Système selon l'une des revendications 1 à 2 **caractérisé en ce qu'**il comporte une antenne de type GPS (4).

4. Système selon l'une des revendications 1 à 3 **caractérisé en ce que** les trois antennes, l'antenne Gatelink, l'antenne Satcom Ku, l'antenne Satcom Inmarsat sont disposées en triangle.

5. Utilisation du système selon l'une des revendications 1 à 4 sur le fuselage d'un avion.

6. Système de télécommunication **caractérisé en ce qu'**il comporte au moins un système antennaire selon l'une des revendications 1 à 4 et au moins un dispositif de pointage d'antenne (9) en liaison avec une centrale inertielle (10) et un émetteur-récepteur (8).
